# FASCICULE DE BREVET EUROPEEN

(11) **EP 3 362 457 B1**
(45) Date de publication et mention de la délivrance du brevet: **04.12.2019**
(21) Numéro de dépôt: 16794378.6
(22) Date de dépôt: 13.10.2016
(51) Int. Cl.: C07F 7/18, G02B 1/10, G02B 27/00

(54) **ARTICLE D'OPTIQUE COMPORTANT UN REVÊTEMENT PRÉCURSEUR D'UN REVÊTEMENT ANTIBUÉE AYANT DES PROPRIÉTÉS ANTISALISSURE OBTENU À PARTIR D'UN COMPOSÉ AMPHIPHILE**
OPTISCHER ARTIKEL MIT EINER VORLÄUFERBESCHICHTUNG AUS EINER BESCHLAGSCHUTZBESCHICHTUNG MIT ANTIFOULING-EIGENSCHAFTEN AUS EINER AMPHIPHILEN VERBINDUNG
OPTICAL ARTICLE COMPRISING A PRECURSOR COATING OF AN ANTI-FOGGING COATING HAVING ANTI-FOULING PROPERTIES OBTAINED FROM AN AMPHIPHILIC COMPOUND

(30) Priorité: 14.10.2015 FR 1559756
(43) Date de publication de la demande: 22.08.2018
(73) Titulaire: Essilor International, 94220 Charenton-le-Pont (FR)
(72) Inventeur: THEODEN, Alexis, 94227 Charenton le Pont cedex (FR); CADET, Mamonjy, 94227 Charenton le Pont cedex (FR)
(74) Mandataire: Jacobacci Coralis Harle
(86) Numéro de dépôt international: PCT/FR2016/052653
(87) Numéro de publication internationale: WO 2017/064431

(56) Documents cités:
- WO-A1-2013/013929
- GB-A- 1 386 876
- JP-A- 2005 187 936
- US-A- 3 477 901
- US-A- 3 817 739
- DATABASE CA [Online] CHEMICAL ABSTRACTS SERVICE, COLUMBUS, OHIO, US; SUZUKI, TOSHIYUKI ET AL: "Synthesis and water resistance of novel bisfunctional silane coupling agents with a double bonded group and a poly(fluoro)alkyl group", XP002759124, extrait de STN Database accession no. 2009:467770
- DATABASE CA [Online] CHEMICAL ABSTRACTS SERVICE, COLUMBUS, OHIO, US; IYANAGI, KOICHI ET AL: "Cosmetics containing fluorinated ladder polysiloxanes", XP002759125, extrait de STN Database accession no. 1997:732311
- DATABASE CA [Online] CHEMICAL ABSTRACTS SERVICE, COLUMBUS, OHIO, US; IYANAGI, KOICHI ET AL: "Fluorine-containing ladder polysiloxanes forming flexible tough water- and oil-repellent films on various substrates for cosmetics, etc. and manufacture thereof", XP002759126, extrait de STN Database accession no. 1997:425024

## Description

La présente invention s'intéresse à l'obtention d'un article d'optique, plus particulièrement d'une lentille ophtalmique, comportant une revêtement de surface qui présente à la fois des propriétés antisalissure et un effet antibuée efficace et durable dans le temps après application d'une solution antibuée temporaire. La présente invention concerne un tel article revêtu, son procédé de préparation et une famille de composés organosilanes permettant de préparer le revêtement de surface en question.

De nombreux supports, tels que les matières plastiques et le verre, présentent l'inconvénient de se recouvrir de buée lorsque la température de leur surface descend au-dessous du point de rosée de l'air ambiant. C'est le cas notamment du verre que l'on utilise pour former des vitrages pour véhicules de transport ou le bâtiment, des miroirs, des lentilles ophtalmiques telles que des verres de lunettes, etc. La formation de buée sur ces surfaces entraîne une diminution de la transparence, due à la diffusion de la lumière par les gouttes d'eau, ce qui peut provoquer une gêne importante.

Pour éviter la formation de buée dans un environnement très humide, c'est-à-dire la condensation de minuscules gouttelettes d'eau sur un support, il est possible de déposer sur la surface externe de ce support des revêtements hydrophiles, ayant un faible angle de contact statique avec l'eau (typiquement 10° ou moins). Ces revêtements antibuée permanents, dont les propriétés hydrophiles découlent de composés hydrophiles liés de façon permanente à un autre revêtement ou support, agissent comme des éponges vis-à-vis de la buée et permettent aux gouttelettes d'eau d'adhérer à la surface du support en formant un film très fin donnant une sensation de transparence. Par suite de l'absorption d'eau, ils gonflent, se ramollissent et deviennent moins résistants mécaniquement.

Une autre solution consiste à utiliser une couche mince poreuse de bas indice de réfraction, constituée en partie de tensioactifs, lesquels permettent à la couche d'acquérir des propriétés antibuée permanentes.

Une alternative plus intéressante aux revêtements antibuée permanents consiste à obtenir un revêtement antibuée par application d'une solution hydrophile temporaire à la surface d'un revêtement précurseur d'un revêtement antibuée.

Il a été décrit dans les demandes de brevet internationales WO 2011/080472, WO 2012/153072 et WO 2013/013929 le dépôt, sur la surface externe d'un article d'optique revêtu d'un revêtement comportant à sa surface des groupes silanols, d'un revêtement précurseur d'un revêtement antibuée obtenu par greffage d'un composé possédant un groupe polyoxyalkylène, notamment un organosilane de formule CH₃O-(CH₂CH₂O)₆₋₉-(CH₂)₃Si(OCH₃)₃. Ce revêtement précurseur d'un revêtement antibuée est hydrophile puisqu'il possède un angle de contact statique avec l'eau allant de 10° à 50°. Le revêtement antibuée proprement dit, qui est un revêtement temporaire, est obtenu après application d'un film d'une composition de tensioactif à la surface du revêtement précurseur, directement sous forme liquide ou au moyen de lingettes sèches ou humides comprenant ladite composition.

Les précurseurs de revêtements antibuée décrits dans ces demandes donnent accès à des revêtements antibuée très performants, mais ne possèdent pas de propriétés antisalissure notables. De tels revêtements, également dénommés "revêtements hydrophobes et/ou oléophobes", sont généralement fabriqués à partir de fluorosilanes ou fluorosilazanes, c'est-à-dire des silanes ou des silazanes contenant des atomes de fluor, et ne permettent naturellement pas de conférer des propriétés antibuée. Des composés utilisables pour obtenir de tels revêtements antisalissure sont décrits dans les brevets JP 2005-187936 et US 6183872.

La demande japonaise JP 2004-317539 décrit une lentille revêtue d'un revêtement antireflet et d'un revêtement formé par dépôt d'un composé comprenant un groupement hydrophobe fluoré, un groupement hydrophile comprenant un groupe polyoxyéthylène et un groupe capable de réagir avec la surface du substrat. Les composés organosilane envisagés possèdent tous le groupement hydrophobe fluoré et le groupement hydrophile polyoxyéthylène inclus dans la chaîne principale d'un même substituant de l'atome de silicium, par exemple le composé de formule C₈F₁₇O(CH₂CH₂O)₂CONH(CH₂)₃Si(OCH₃)₃ dans lequel ces groupements sont accolés. Le revêtement ainsi formé possède un angle de contact avec l'eau variant de 50 à 90° et donne accès à un revêtement antibuée après application à sa surface de d'un tensioactif.

La demande japonaise JP 2005/281143 décrit d'autres revêtements pour lentilles optiques à base de silanes non fluorés possédant des groupes polyoxyéthylène possedant des angles de contact avec l'eau de l'ordre de 60-65°, qui une fois un surfactant appliqué à leur surface, présentent des propriétés antibuée.

La demande US 2013/308189 décrit un article d'optique comportant un revêtement antibuée obtenu par dépôt d'un silane de formule RₒXₘSiAₙ, où m=1-3, n=1-2 et o=0-1, X est un groupe hydrolysable, R est un groupe alkyle en C1-C4, A est un groupe de structure -A1-A2, où -A1- est un groupe hydrophobe lié au silicium, et -A2 représente un groupe terminal hydrophile poly(méth)acrylate lié à A1. Avec une telle structure, il est enseigné que l'angle de contact avec l'eau du revêtement antibuée est maintenu à un niveau bas.

La demande internationale WO 2006/049020 décrit une composition permettant de former à la surface d'une lentille optique un revêtement antisalissure, comprenant un premier silane polymérisable fluoré et un second silane polymérisable possédant un groupe hydrophile (notamment un groupe oxyalkylène), et/ou des hydrolysats de ces silanes. Ces revêtements présentent des angles de contact avec l'eau de l'ordre de 100°.

La demande internationale WO 2013/005710 décrit un article d'optique successivement revêtu d'une couche capable d'absorber l'eau à base d'une résine acrylique ou uréthane possédant une chaîne polyoxyéthylène et d'une couche hydrophobe à base d'un silane amino-modifié ou mercapto-modifié. La surface externe de l'article présente ainsi un angle de contact avec l'eau supérieur ou égal à 100°.

La demande internationale WO 2015/082521, au nom du déposant, divulgue un article d'optique ayant un substrat revêtu d'un revêtement précurseur d'un revêtement antibuée dont la surface présente un angle de contact statique avec l'eau supérieur à 90° et une composante polaire de l'énergie de surface supérieure à 1,5 mJ/m². Un tel revêtement est typiquement obtenu par dépôts successifs d'un composé B hydrophobe et d'un composé A hydrophile, en particulier un organosilane A comportant au moins un groupe polyoxyalkylène et ayant au moins un atome de silicium porteur d'au moins un groupe hydrolysable et un organosilane B comportant au moins un groupe fluorocarboné et ayant au moins un atome de silicium porteur d'au moins un groupe hydrolysable.

Les revêtements divulgués dans ces différentes demandes possèdent soit des propriétés antisalissure pouvant être améliorées, soit des propriétés antibuée insuffisantes pouvant être améliorées, ou bien nécessitent l'application successive de plusieurs composés pour parvenir aux propriétés souhaitées.

La présente invention vise l'obtention d'un article d'optique comportant un revêtement externe pouvant présenter à la fois des propriétés antibuée et antisalissure, dont le procédé de fabrication serait simplifié par rapport aux procédés multiétapes ou multicomposants connus.

Les inventeurs ont préparé une nouvelle famille de molécules et mis au point une nouvelle méthode de préparation de surfaces « mixtes », c'est-à-dire possédant à la fois des fonctions hydrophiles et des fonctions hydrophobes, permettant de bénéficier alternativement de propriétés antibuée et antisalissure, notamment une bonne capacité du revêtement à être nettoyé. Selon l'invention, le revêtement précurseur du revêtement antibuée présente l'avantage de pouvoir être formé en une seule étape à partir d'un composé unique, en déposant une molécule dont la structure comporte un bloc hydrophobe et un bloc hydrophile arrangés de façon spécifique, en d'autres termes un composé amphiphile (hydrophile-hydrophobe).

Les objectifs de l'invention sont atteints grâce à un composé organosilane ayant au moins un atome de silicium porteur d'au moins un groupe hydrolysable, d'au moins un groupe non hydrolysable comportant un groupe hydrophile choisi parmi les groupes polyoxyalkylène, polyol, polyéther et sulfonate, et d'au moins un groupe non hydrolysable comportant un groupe hydrophobe possédant au moins un atome de fluor, ledit groupe hydrophile et ledit groupe hydrophobe n'étant pas tous deux compris dans la chaîne principale d'un même substituant de l'atome de silicium.

L'invention concerne également un article d'optique ayant un substrat revêtu d'un revêtement précurseur d'un revêtement antibuée, formé par dépôt à la surface de l'article d'optique d'au moins un composé organosilane (ce terme incluant notamment les organosilazanes) ayant au moins un atome de silicium porteur d'au moins un groupe hydrolysable, d'au moins un groupe non hydrolysable comportant un groupe hydrophile, et d'au moins un groupe non hydrolysable comportant un groupe hydrophobe possédant au moins un atome de fluor, ledit groupe hydrophile et ledit groupe hydrophobe n'étant pas tous deux compris dans la chaîne principale d'un même substituant de l'atome de silicium, ledit revêtement précurseur étant optionnellement revêtu d'un film de tensioactif.

Dans la présente demande, un revêtement qui est "sur" un substrat/revêtement ou qui a été déposé "sur" un substrat/revêtement est défini comme un revêtement qui (i) est positionné au-dessus du substrat/revêtement, (ii) n'est pas nécessairement en contact avec le substrat/revêtement, c'est-à-dire qu'un ou plusieurs revêtements intermédiaires peuvent être disposés entre le substrat/revêtement et le revêtement en question (toutefois, il est de préférence en contact avec ledit substrat/revêtement), et (iii) ne recouvre pas nécessairement le substrat/revêtement complètement. Lorsque "une couche 1 est localisée sous une couche 2", on comprendra que la couche 2 est plus éloignée du substrat que la couche 1.

Par "revêtement antibuée", on entend dans la présente demande un revêtement qui, lorsqu'un substrat en verre transparent revêtu de ce revêtement est placé dans des conditions générant de la buée sur ledit substrat non équipé dudit revêtement, permet immédiatement une acuité visuelle > 6/10^{ème} pour un observateur observant à travers le verre revêtu une échelle d'acuité visuelle située à 5 mètres de distance. Un test permettant d'évaluer les propriétés antibuée d'un revêtement est décrit dans la partie expérimentale. Dans des conditions génératrices de buée, les revêtements antibuée peuvent soit ne pas présenter de buée à leur surface (pas de distorsion visuelle dans le cas idéal, ou bien distorsion visuelle mais acuité visuelle > 6/10^{ème} dans les conditions de mesure indiquées ci-dessus), soit présenter de la buée à leur surface mais tout de même permettre, malgré la perturbation de la vision causée par la buée, une acuité visuelle > 6/10^{ème} dans les conditions de mesure indiquées ci-dessus. Un revêtement non antibuée ne permet pas une acuité visuelle > 6/10^{ème} tant qu'il est exposé à des conditions générant de la buée et présente généralement un voile de condensation dans les conditions de mesure indiquées ci-dessus.

Par "verre antibuée", on entend dans la présente demande un verre équipé d'un "revêtement antibuée" tel que défini ci-dessus.

Par "précurseur d'un revêtement antibuée", on entend dans la présente demande un revêtement qui, par application à sa surface d'une composition contenant un tensioactif de façon à former un film, constitue un revêtement antibuée au sens de l'invention. La composition comprenant un tensioactif peut être une solution liquide appliquée directement sur un article d'optique, soit une composition imprégnant une lingette, cette lingette pouvant être humide ou sèche (absence de solvants), par exemple une lingette sèche CEMOI™ imprégnée de Capstone™ FS3100 telle que celle décrite dans la demande de brevet WO 2013/013929.

Les tensioactifs permettant de former un film antibuée comportent de préférence un groupe fluorocarboné et au moins une unité polyoxyalkylène. L'ensemble constitué par le revêtement précurseur et le film de solution à base de tensioactif constitue le revêtement antibuée proprement dit.

Ainsi, le revêtement précurseur du revêtement antibuée selon l'invention, qui est un revêtement ayant une surface hydrophobe antisalissure, n'est pas considéré comme étant un revêtement antibuée au sens de l'invention mais peut être converti facilement en revêtement antibuée. Effectivement, ce précurseur de revêtement antibuée ne permet pas une acuité visuelle > 6/10^{ème} dans les conditions de mesure indiquées ci-dessus.

Par "revêtement antibuée temporaire", on entend un revêtement antibuée obtenu après l'application d'une solution liquide contenant au moins un agent conférant des propriétés antibuée, préférentiellement un tensioactif, à la surface d'un revêtement précurseur dudit revêtement antibuée. La durabilité d'un revêtement antibuée temporaire est généralement limitée par des essuyages de sa surface, les molécules de tensioactifs n'étant pas accrochées de façon permanente à la surface du revêtement mais simplement adsorbées plus ou moins durablement.

L'article d'optique préparé selon l'invention comprend un substrat, de préférence transparent (Tv supérieur à 85%, mieux supérieur à 90%, mieux encore supérieurà 95% et de façon optimale supérieur à 97% Le facteur Tv répond à une définition internationale normalisée (norme ISO13666 :1998 et est mesuré conformément à la norme ISO8980-3). Il est défini dans la gamme de longueur d'onde allant de 380 à 780 nm), ayant des faces principales avant et arrière, l'une au moins desdites faces principales, de préférence les deux faces principales, comprenant au moins un revêtement précurseur d'un revêtement antibuée. Par face arrière (généralement concave) du substrat, on entend la face qui, lors de l'utilisation de l'article, est la plus proche de l'œil du porteur. Inversement, par face avant (généralement convexe) du substrat, on entend la face qui, lors de l'utilisation de l'article, est la plus éloignée de l'œil du porteur.

Bien que l'article selon l'invention puisse être un article d'optique quelconque susceptible d'être confronté à une formation de buée, tel qu'un écran, un vitrage pour l'industrie automobile ou du bâtiment, ou un miroir, il est de préférence une lentille optique, mieux une lentille ophtalmique, pour lunettes, ou une ébauche de lentille optique ou ophtalmique.

Le revêtement précurseur du revêtement antibuée est en contact direct soit avec une surface principale du substrat, soit avec un premier revêtement, lorsque ladite surface principale du substrat est revêtue d'un premier revêtement. Le premier revêtement de l'invention, qui de préférence comporte à sa surface des groupes silanols, peut être formé sur au moins l'une des faces principales d'un substrat nu, c'est-à-dire non revêtu, ou sur au moins l'une des faces principales d'un substrat déjà revêtu d'un ou plusieurs revêtements fonctionnels.

Dans la suite de la demande, la préparation des couches sera décrite par dépôt direct de celles-ci sur l'article d'optique.

L'invention comprend également un mode de réalisation dans lequel le dépôt de toutes les couches ou de certaines d'entre elles est effectué sur un film possédant une face comportant lesdits revêtements et une face destinée à être collée à la surface de l'article d'optique. Outre le collage, les revêtements souhaités peuvent aussi être transféres depuis un support dans lequel les revêtements ont été déposés dans le sens inverse de l'ordre dans lequel ils peuvent apparaître sur l'article final.

Le substrat de l'article d'optique selon l'invention, qui comprend au moins une surface principale, peut être un verre minéral ou organique, par exemple un verre organique en matière plastique thermoplastique ou thermodurcissable.

Le substrat de l'article selon l'invention peut être choisi parmi les substrats cités dans la demande WO 2008/062142, par exemple un substrat obtenu par (co)polymérisation du bis allyl carbonate du diéthylèneglycol, un substrat en poly(thio)uréthane ou à base de polyépisulfure, un substrat en polycarbonate de bis(phénol A) (thermoplastique), noté PC, ou un substrat en PMMA (polyméthacrylate de méthyle).

Dans certaines applications, il est préférable que la surface principale du substrat soit revêtue d'un ou plusieurs revêtements fonctionnels préalablement au dépôt du premier revêtement. Ces revêtements fonctionnels classiquement utilisés en optique peuvent être, sans limitation, une couche de primaire antichoc, un revêtement anti-abrasion et/ou anti-rayure, un revêtement polarisé, un revêtement photochrome ou un revêtement coloré, en particulier une couche de primaire antichoc revêtue d'une couche anti-abrasion et/ou anti-rayure.

Le premier revêtement peut être déposé sur un revêtement anti-abrasion et/ou anti-rayure. Le revêtement anti-abrasion et/ou anti-rayure peut être toute couche classiquement utilisée comme revêtement anti-abrasion et/ou anti-rayure dans le domaine des lentilles ophtalmiques.

Les revêtements résistant à l'abrasion et/ou aux rayures sont de préférence des revêtement durs à base de poly(méth)acrylates ou de silanes comprenant généralement une ou plusieurs charges minérales destinées à augmenter la dureté et/ou l'indice de réfraction du revêtement une fois durci. Ils sont décrits plus en détail dans la demande WO 2011/080472.

Préalablement au dépôt du revêtement anti-abrasion et/ou anti-rayure, il est possible de déposer sur le substrat un revêtement de primaire améliorant la résistance au choc et/ou l'adhésion des couches ultérieures dans le produit final. Ces revêtements peuvent être toute couche de primaire antichoc classiquement utilisée pour les articles en matériau polymère transparent, tels que des lentilles ophtalmiques, et sont décrits plus en détail dans la demande WO 2011/080472.

Le premier revêtement selon l'invention peut notamment être un revêtement anti-abrasion et/ou anti-rayure, ou, selon le mode de réalisation préféré, un revêtement antireflet monocouche ou un revêtement antireflet multicouche. Ce premier revêtement comporte de préférence à sa surface des groupes silanols.

Par revêtement comprenant à sa surface des groupes silanols, on entend un revêtement qui possède naturellement à sa surface des groupes silanols, ou bien un revêtement dont les groupes silanols ont été créés après qu'il a été soumis à un traitement d'activation de surface. Ce revêtement est de préférence un revêtement à base de siloxanes ou de silice, par exemple, sans limitation, une couche de silice, un revêtement sol-gel, à base notamment d'organosilanes tels que des alcoxysilanes, ou un revêtement à base de colloïdes de silice. Il peut s'agir notamment d'un revêtement anti-abrasion et/ou anti-rayure, ou d'un revêtement antireflet monocouche ou d'un revêtement antireflet multicouche dont la couche externe possède à sa surface des groupes silanols. Par couche externe d'un empilement, on entend la couche de l'empilement la plus éloignée du substrat.

Le traitement d'activation de surface éventuellement employé pour créer des groupes silanols ou du moins augmenter leur proportion à la surface d'un revêtement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide. Il peut également s'agir d'un traitement de surface acide ou basique et/ou par solvants. Plusieurs de ces traitements peuvent être combinés.

Par espèces énergétiques (et/ou réactives), on entend notamment des espèces ioniques ayant une énergie allant de 1 à 300 eV, préférentiellement de 1 à 150 eV, mieux de 10 à 150 eV, et mieux encore de 40 à 150 eV. Les espèces énergétiques peuvent être des espèces chimiques telles que des ions, des radicaux, ou des espèces telles que des photons ou des électrons.

Le revêtement comportant à sa surface des groupes silanols est de préférence une couche de bas indice de réfraction à base d'oxyde de silicium, préférentiellement de silice (comprenant de la silice), idéalement consiste en une couche de silice (SiO₂), généralement obtenue par dépôt en phase vapeur. Ladite couche à base de silice a de préférence une épaisseur inférieure ou égale à 500 nm, mieux de 2 à 110 nm, préférentiellement variant de 5 à 100 nm.

Le revêtement comportant à sa surface des groupes silanols comprend de préférence au moins 70 % en masse de SiO₂, mieux au moins 80 % en masse et mieux encore au moins 90 % en masse de SiO₂. Comme il a été dit, dans une réalisation optimale, il comprend 100 % en masse de silice.

Le revêtement comportant à sa surface des groupes silanols peut également être un revêtement sol-gel à base de silanes tels que des alcoxysilanes, ou des organosilanes, et comprenant éventuellement des oxydes colloïdaux, tel que décrit plus en détail dans la demande WO 2012/153072.

Selon un mode de réalisation de l'invention, le revêtement comportant à sa surface des groupes silanols est une couche à base de silice déposée sur un revêtement anti-abrasion, de préférence déposée directement sur ce revêtement anti-abrasion.

Selon un autre mode de réalisation de l'invention, qui constitue le mode de réalisation préféré, l'article d'optique selon l'invention comporte un revêtement antireflet. Lorsqu'un tel revêtement est présent, il constitue généralement le premier revêtement au sens de l'invention. Ce revêtement antireflet peut être tout revêtement antireflet classiquement utilisé dans le domaine de l'optique, en particulier de l'optique ophtalmique.

Un revêtement antireflet se définit comme un revêtement, déposé à la surface d'un article d'optique, qui améliore les propriétés anti-réfléchissantes de l'article d'optique final. Il permet de réduire la réflexion de la lumière à l'interface article/air sur une portion relativement large du spectre visible.

Comme cela est bien connu également, les revêtements antireflet comprennent classiquement un empilement monocouche ou multicouche de matériaux diélectriques. Ce sont de préférence des revêtements multicouches, comprenant des couches de haut indice de réfraction (HI) et des couches de bas indice de réfraction (BI). La constitution de ces revêtements, leur épaisseur et leur mode de dépôt sont décrits notamment dans les demandes WO 2010/109154 et WO 2012/153072.

Avant la formation du précurseur du revêtement antibuée sur le premier revêtement ou sur le substrat nu, il est courant de soumettre la surface de ce premier revêtement ou du substrat à un traitement d'activation physique ou chimique, destiné à augmenter l'adhésion du précurseur du revêtement antibuée. Ces traitements peuvent être choisis parmi ceux décrits précédemment pour l'activation du revêtement comprenant à sa surface des groupes silanols.

Selon l'invention, le premier revêtement, lorsqu'il est présent, est directement en contact avec le revêtement précurseur du revêtement antibuée. Selon un autre mode de réalisation, le substrat est lui-même directement en contact avec le revêtement précurseur du revêtement antibuée, qui va maintenant être décrit.

Le revêtement précurseur du revêtement antibuée est formé d'un matériau contenant des groupes hydrophiles et des groupes hydrophobes fluorés, obtenu par dépôt à la surface de l'article d'optique d'au moins un composé organosilane ayant au moins un atome de silicium porteur d'au moins un groupe hydrolysable, d'au moins un groupe non hydrolysable comportant un groupe hydrophile, et d'au moins un groupe non hydrolysable comportant un groupe hydrophobe possédant au moins un atome de fluor, ledit groupe hydrophile et ledit groupe hydrophobe n'étant pas tous deux compris dans la chaîne principale d'un même substituant de l'atome de silicium.

Le groupe non hydrolysable comportant un groupe hydrophile et le groupe non hydrolysable comportant un groupe hydrophobe possédant au moins un atome de fluor peuvent être reliés directement à l'atome de silicium, ou indirectement par l'intermédiaire d'un groupe espaceur. Ils peuvent représenter deux substitutants différents ou être portés par deux substituants différents de l'atome de silicium (cas des composés de formules A1 et B décrites plus bas), ou bien être portés par un même substituant de l'atome de silicium (cas des composés de formules C, D et E décrites plus bas). Cependant, dans ce cas, le groupe non hydrolysable comportant un groupe hydrophile et le groupe non hydrolysable comportant un groupe hydrophobe fluoré ne sont pas tous deux compris dans la chaîne principale de ce substituant de l'atome de silicium, seul l'un d'eux pouvant y figurer.

Dans la présente demande, un groupe non hydrolysable porté par l'atome de silicium est un groupe qui ne peut pas être hydrolysé de façon à conduire à la formation d'un groupe silanol. Un tel groupe non hydrolysable est de préférence lié à l'atome de silicium par l'intermédiaire d'un atome de carbone.

De préférence, le composé organosilane répond aux formules (I) ou (II) :

(G¹)(G²)Si(X)ₙ(R¹)₂₋ₙ (I)

(G¹)(G²)A-Si(X)ₘ(R¹)₃₋ₘ (II)

dans lesquelles G¹ est un groupe non hydrolysable comportant un groupe hydrophile, G² est un groupe non hydrolysable comportant un groupe hydrophobe possédant au moins un atome de fluor, R¹ est un groupe organique monovalent lié au silicium par un atome de carbone, les groupes X, identiques ou différents, sont des groupes hydrolysables, A est un groupe espaceur trivalent, n = 1 ou 2, m = 1, 2 ou 3. De préférence, n = 2 et m = 3.

Le composé organosilane de l'invention comprend de préférence un atome de silicium porteur d'au moins deux groupes hydrolysables, notamment deux ou trois groupes hydrolysables, de préférence deux.

Les groupes hydrolysables, identiques ou différents, notés X dans les formules I et II ci-dessus, sont préférentiellement choisis parmi les groupes OH, alcoxy -O-R³, où R³ est un radical alkyle, linéaire ou ramifié préférentiellement en C₁-C₄, mieux en C1, acyloxy -O-C(O)R⁴ où R⁴ est un radical alkyle linéaire ou ramifié, préférentiellement en C₁-C₆, de préférence méthyle ou éthyle, halogènes tels que Cl et Br, triméthylsiloxy (CH₃)₃SiO-, -NH₂, -NH-R⁴ où R⁴ est un groupe alkyle tel que défini ci-dessus, les groupes dialkylamino dans lesquels les groupes alkyle linéaires ou ramifiés sont préférentiellement en C₁-C₆ (par exemple les groupes - N(CH₃)₂ et -N(C₂H₅)₂), un groupe silazane relié à l'atome de silicium par l'intermédiaire de son atome d'azote tel que le groupe -NHSiMe₃ ou un groupe -NHSi dont l'atome de silicium est trisubstitué par des groupes G¹, G² et/ou R^{a} (G¹, G² étant tels que définis ci-dessus et R^{a} désignant un groupe organique monovalent lié au silicium par un atome de carbone), par exemple un groupe -NHSi(G¹)(G²)(R^{a}), ou et les combinaisons de ces groupes. Dans la présente demande, un groupe hydroxyle est considéré comme étant un groupe hydrolysable. De préférence, les groupes hydrolysables, qui agissent en tant que têtes de greffage, sont des groupes alcoxy, en particulier méthoxy ou éthoxy, et mieux éthoxy.

Selon des modes de réalisation préférés, le composé organosilane comprend un groupe dialcoxysilyle tel qu'un groupe diéthoxysilyle ou diméthoxysilyle, un groupe trialcoxysilyle tel qu'un groupe triéthoxysilyle ou triméthoxysilyle, ou bien un groupe silazane. Les composés organosilanes préférés sont des dialcoxysilanes.

De préférence, les composés organosilanes de l'invention comprennent un ou deux atomes de silicium porteur d'au moins un groupe hydrolysable, mieux un seul.

Le groupe R¹, lorsqu'il est présent dans les composés de formule I ou II, est un groupe organique monovalent lié au silicium par un atome de carbone. Il s'agit de préférence d'un groupe hydrocarboné, saturé ou non, linéaire ou ramifié, de préférence en C₁-C₁₀ et mieux en C₁-C₄, par exemple un groupe alkyle, tel que méthyle ou éthyle, un groupe vinyle, un groupe aryle, par exemple aromatique monocyclique ou bicyclique par exemple phényle, éventuellement substitué, notamment par un ou plusieurs groupes alkyle en C₁-C₄. De préférence R¹ représente le groupe méthyle.

Le composé organosilane amphiphile de l'invention est porteur d'au moins un groupe hydrophile. Par groupes « hydrophiles », on entend, dans le cadre de la présente invention, des combinaisons d'atomes qui sont susceptibles de s'associer avec des molécules d'eau, notamment par liaison hydrogène. Ce sont généralement des groupes organiques polaires, qui peuvent comprendre des atomes chargés. Le composé organosilane comporte de préférence au moins un groupe choisi parmi les groupes polyoxyalkylène, polyamine, polyol (groupe polyhydroxylé, par exemple un groupe polysaccharide ou polyglycérol), polyéther (par exemple un éther de polyol) ou sulfonate, de préférence un groupe polyoxyalkylène, polyamine ou polyol, mieux un groupe polyoxyalkylène. Selon un autre mode de réalisation, le groupe hydrophile est choisi parmi les groupes polyoxyalkylène, polyol et polyéther.

Dans les composés organosilanes de l'invention, et en particulier dans les composés de formule (I), le groupe non hydrolysable comportant un groupe hydrophile (groupe G¹) a généralement pour formule -L-R², où L est un groupe divalent linéaire ou ramifié lié à l'atome de silicium par un atome de carbone, et R² est un groupe comprenant un groupe polyoxyalkylène lié au groupe L par l'intermédiaire d'un atome d'oxygène, cet atome d'oxygène étant compris dans le groupe R². Des exemples non limitatifs de groupes L sont les groupes alkylène linéaires ou ramifiés, de préférence de C1 à C15, et mieux de C2 à C15, et mieux encore de C2 à C10, éventuellement substitués, un groupement en C3-C10 monocyclique ou bicyclique, cycloalkylène, de préférence C3-C10 monocyclique ou bicyclique, arylène, carbonyle, amido (de préférence NHCO), ou des combinaisons de ces groupes comme les groupes cycloalkylènealkylène, biscycloalkylène, biscycloalkylènealkylène, arylènealkylène, bisphénylène, bisphénylènealkylène, amido alkylène, dont un exemple est le groupe CONH(CH₂)₃, ou bien les groupes -OCH₂CH(OH)CH₂- et -NHC(O)-. Les groupes L préférés possèdent de 1 à 4 atomes de carbone, et/ou sont les groupes alkylène, de préférence linéaires, ayant de préférence 10 atomes de carbone ou moins, mieux 5 atomes de carbone ou moins, par exemple les groupe éthylène et propylène.

Le groupe hydrophile et/ou le groupe G¹ du composé organosilane comprennent de préférence de 2 à 100 atomes de carbone, mieux de 6 à 80 atomes de carbone et encore mieux de 8 à 60 ou de 10 à 30 atomes de carbone. Dans un mode de réalisation, ce ou ces groupes comprennent moins de 80, mieux moins de 60, et encore mieux moins de 50 atomes de carbone. Les groupes polyoxyalkylène préférés sont les groupes polyoxyéthylène - (CH₂CH₂O)_{n"}- (n" variant dans des proportions compatibles avec les longueurs de chaines indiquées ci-dessus), polyoxypropylène, ou des combinaisons de ces groupes. Les groupes R² préférés comprennent un groupe polyoxyalkylène vérifiant ces caractéristiques.

Le groupe non hydrolysable comportant un groupe hydrophile (groupe G¹) est de préférence un groupe de formule :

-(CH₂)_{n'}-(L')_{m'}-(OR)_{n"}-X¹-(L")_{m"}-R' (III)

où R' est un atome d'hydrogène, un groupe acyle ou un groupe alkyle, linéaire ou ramifié, préférentielllement en C1-C10, mieux C1 à C5 ou C1 à C4, pouvant être substitué par un ou plusieurs groupes fonctionnels, et pouvant comporter en outre une ou plusieurs doubles liaisons, R est un groupe alkylène linéaire ou ramifié, de préférence linéaire, comprenant de préférence de 2 à 4 atomes de carbone, mieux de 2 à 3 atomes de carbone, par exemple un groupe éthylène ou propylène, L' et L" sont des groupes divalents identiques ou différents, linéaires ou ramifiés, X¹ représente O, NH ou S, de préférence un atome d'oxygène, n' est un entier allant de 0 à 10, de préférence de 1 à 10 ou de 1 à 5, mieux égal à 3, n" est un entier allant de 1 à 50, de préférence de 3 à 50, 4 à 50, 4 à 30, 5 à 25 ou 5 à 15, m' est égal à 0 ou 1, de préférence 0, m" est égal à 0 ou 1, de préférence 0.

Selon des modes de réalisation préférés, n" est égal à 3, ou bien varie de 6 à 9, de 9 à 12, de 21 à 24, ou de 25 à 50 de préférence de 6 à 9.

Les groupes L' et L", lorsqu'ils sont présents, peuvent être choisis parmi les groupes divalents L précédemment décrits et représentent de préférence le groupe -OCH₂CH(OH)CH₂- ou le groupe -NHC(O)-. Dans ce cas, les groupes -OCH₂CH(OH)CH₂- ou -NHC(O)- sont connectés aux groupes adjacents (CH₂)_{n'} (dans le cas d'un groupe L') et R' (dans le cas d'un groupe L") par l'intermédiaire de leur atome d'oxygène (pour le groupe -OCH₂CH(OH)CH₂-) ou par l'intermédiaire de leur atome d'azote (pour le groupe -NHC(O)-).

Le groupe -X¹-(L")_{m"}-R' est de préférence un groupe alcoxy (m" = 0, R' = alkyl, X¹ = O), idéalement un groupe méthoxy.

Selon un mode de réalisation, R' désigne un groupe alkyle possédant moins de 5 atomes de carbone, de préférence le groupe méthyle. R' peut aussi désigner un groupe acyle aliphatique ou aromatique, notamment le groupe acétyle.

Enfin, R' peut désigner un groupe trialcoxysilylalkylène ou trihalogénosilylalkylène tel que le groupe -(CH₂)ⱼSi(R⁵)₃, les groupements R⁵ étant identiques ou différents et représentant des groupes hydrolysables tels que les groupes X définis précédemment et j est un entier tel que le groupe n' défini précédemment. Un exemple d'un tel groupe R' est le groupe - (CH₂)₃Si(OC₂H₅)₃. Dans ce mode de réalisation, le composé organosilane comporte deux atomes de silicium porteurs d'au moins un groupe hydrolysable.

Le groupe G¹ préféré est un groupe alcoxy(polyalkylènoxy)alkyle.

Le composé organosilane amphiphile de l'invention est porteur d'au moins un groupe hydrophobe possédant au moins un atome de fluor. Par groupes « hydrophobes », on entend, dans le cadre de la présente invention, des combinaisons d'atomes qui ne sont susceptibles pas susceptibles de s'associer avec des molécules d'eau, notamment par liaison hydrogène. Ce sont généralement des groupes organiques non polaires, exempts d'atomes chargés. Le composé organosilane comporte donc au moins un groupe hydrophobe fluoré, de préférence perfluoré, typiquement un groupe fluorocarboné (c'est-à-dire contenant du carbone et du fluor), choisi préférentiellement parmi les groupes fluoroalkyle, fluoroalcényle, perfluoroalkyle, perfluoroalcényle, (poly)(fluoro alkyl éther), (poly)(perfluoro alkyl éther), (poly)fluoro alcoxy[(poly)alkylènoxy] alkyle, de préférence fluoroalkyle.

Ces groupes, linéaires, cycliques ou ramifiés, peuvent être directement connectés les uns aux autres ou par l'intermédiaires de groupes divalents, notamment des groupes alkylène, alcénylène, des atomes d'oxygène ou des ponts azotés (-NH-, -N=). Les groupes fluorocarbonés comprennent de préférence au moins 50 % d'atomes de fluor en remplacement des atomes d'hydrogène du groupe hydrocarboné dont ils dérivent, mieux au moins 70 % et encore mieux au moins 90 %. Ces groupes peuvent par exemple comprendre des unités telles que -CHF-, -CHF-CHF-, -CH₂-C(CF₃)₂-, -CF₂-C(CF₃)₂-, -CF₂-, -CF₂-CF₂-, -CF₂-CF₂-CF₂-, -CF₂-C(CF₃)₂-, -(CHF)ₙ-, -(CF₂)ₙ-, n désignant un entier supérieur ou égal à 3.

Par groupe poly(fluoro alkyl éther), on entend un groupe résultant de la polymérisation d'unités fluoroalcoxy ou de la copolymérisation de ces unités avec d'autres unités telles que des unités alcoxy. Des exemples de tels groupes sont les groupes -(CHF-CHF-O)ₙ-, -(CH₂-CF₂-O)ₙ-, -(CF₂-CF₂-O)ₙ-, -(CF₂-CF₂-CF₂-O)ₙ-, -(CF₂-CH(CF₃)-O)ₙ-, -(CF₂-CF(CF₃)-O)ₙ-, n désignant un entier supérieur ou égal à 1. De tels groupes peuvent aussi inclure des unités polyalcoxy telles que -(CH₂-CH₂-O)ₘ-, -(CH₂-CH₂-CH₂-O)ₘ- -(CH₂-C(CH₃)₂-O)ₘ-, m désignant un entier supérieur ou égal à 1.

Dans les composés organosilanes de l'invention, et en particulier dans les composés de formule (I), le groupe non hydrolysable comportant un groupe hydrophobe fluoré (groupe G²) a généralement pour formule -L-R⁶, où L est un groupe divalent lié à l'atome de silicium par un atome de carbone, et R⁶ est un groupe comprenant un groupe fluorocarboné lié au groupe L par l'intermédiaire d'un atome de carbone. Les groupes L peuvent être choisis parmi ceux cités précédemment pour les groupes -L-R².

Le groupe hydrophobe fluoré et/ou le groupe G² du composé organosilane comprennent de préférence de 2 à 100 atomes de carbone, mieux de 3 à 50 atomes de carbone et encore mieux de 4 à 30, 5 à 20 ou 5 à 15 atomes de carbone. Dans un mode de réalisation, ce ou ces groupes comprennent moins de 80, mieux moins de 40, et encore mieux moins de 25 atomes de carbone. Les groupes R⁶ préférés comprennent un groupe polyoxyalkylène vérifiant ces caractéristiques.

Le groupe non hydrolysable comportant un groupe hydrophobe possédant au moins un atome de fluor (groupe G²) est de préférence un groupe fluoré de formule :

-(C_{x'}H_{y'}F_{z'})-(L¹)_{p'}-(CₓH_{y}F_{z})-(L²)_{p"}-R" (IV)

où R" est un atome d'hydrogène, de fluor, un groupe acyle ou un groupe alkyle, linéaire ou ramifié, pouvant être substitué par un ou plusieurs hétéroatomes ou groupes fonctionnels, et pouvant comporter en outre une ou plusieurs doubles liaisons, L¹ et L² sont des groupes divalents identiques ou différents, linéaires ou ramifiés, x' est un entier allant de 0 à 10, de préférence de 1 à 10 ou de 1 à 5, mieux égal à 3, y' et z' sont des entiers tels que y'+z' = 2x', x est un entier allant de 1 à 40, de préférence de 1 à 15, mieux de 2 à 8, y et z sont des entiers tels que y+z = 2x, p' est égal à 0 ou 1, de préférence 0, p" est égal à 0 ou 1, de préférence 0. R" peut aussi désigner un groupe acyle aliphatique ou aromatique, notamment le groupe acétyle ou trifluoroacétyle.

Le groupe R" est de préférence un groupe fluoroalkyle, mieux perfluoroalkyle, linéaire ou ramifié. Il comporte de préférence de 1 à 10 atomes de carbone, mieux de 1 à 5 et idéalement de 1 à 3 et représente notamment le groupe trifluorométhyle.

Le groupe de formule (CₓH_{y}F_{z}) est de préférence un groupe de formule (CF₂)ₓ, où x est tel que défini précédemment. Le groupe de formule (C_{x'}H_{y'}F_{z'}) est de préférence un groupe de formule (CH₂)_{x'}, où x' est tel que défini précédemment.

Les groupes L¹ et L², lorsqu'ils sont présents, peuvent être choisis parmi les groupes divalents L, L' et L" cités précédemment et peuvent également représenter des groupes oxyalkylène (-O-alkylène-) ou alkylènoxy (-alkylène-O-) de préférence en C2-C4, mieux en C2-C3. Le groupe -(L²)_{p"}-R" est de préférence un groupe fluoroalkyle ou perfluoroalkyle, idéalement un groupe trifluorométhyle.

Des exemples de groupes G² utilisables dans l'invention sont les groupes de formules :

F(CF₂)_{c}-(CH₂)_{d}-(CF₂)ₑ-(CH₂)_{f}- (VII)

H(CH₂)_{g}-(CF₂)ₕ-(CH₂)ᵢ-(CF₂)ⱼ- (VIII)

où chacun de c, d, e, f, g, h, i et j désigne un entier allant de 0 à 10, l'un au moins de c, d, e et f est différent de 0, l'un au moins de g, h, i et j est différent de 0. De préférence, 5 ≤ c+d+e+f ≤ 15 et/ou 5 ≤ g+h+i+j ≤ 15, et mieux 5 ≤ c+d+e+f ≤ 12 et/ou 5 ≤ g+h+i+j ≤ 12.

Le groupe G² préféré est un groupe (perfluoroalkyl)alkyle.

Dans les composés de formule II, les groupes G¹ et G² peuvent être portés par un même atome du groupe espaceur A (typiquement un atome de carbone), ou par deux atomes différents du groupe espaceur A, adjacents ou non. Dans ces composés, les groupes G¹ et G² correspondent respectivement aux groupes R² et R⁶ mentionnés ci-dessus. Ils sont reliés à l'atome de silicium par l'intermédiaire d'un groupe espaceur trivalent A, qui est généralement un groupe hydrocarboné comprenant de 1 à 20 atomes de carbone, mieux de 1 à 10 atomes de carbone, et encore mieux de 1 à 4 atomes de carbone, pouvant être substitué par un ou plusieurs groupes fonctionnels, et pouvant comporter en outre une ou plusieurs doubles liaisons. De manière plus préférée, le groupe espaceur A est un groupe hydrocarboné comprenant de 1 à 2 atomes de carbone, de préférence 1 atome de carbone. Le groupe A peut être de nature aliphatique ou comporter au moins un groupe aromatique. Il s'agit de préférence d'un groupe aliphatique, notamment d'un groupe méthine.

Des exemples non limitatifs de groupes espaceurs trivalents A utilisables dans la présente invention sont représentés ci-dessous, où k désigne un entier allant de préférence de 0 à 10, de façon plus préférée de 0 à 2, de manière encore plus préférée 0 ou 1. De préférence, k désigne 0. Dans ces formules, le groupe espaceur est de préférence connecté à l'atome de silicium via l'atome de carbone situé à l'extrémité droite de la formule :

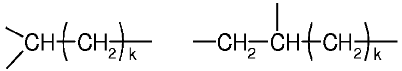

Des exemples de familles de composés organosilanes selon l'invention ayant un groupe hydrophile et un groupe hydrophobe fluoré non compris dans la chaîne principale du même substituant de l'atome de silicium sont celles de formules : 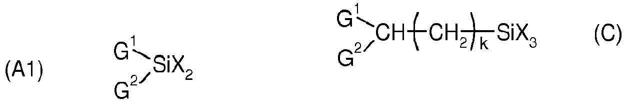 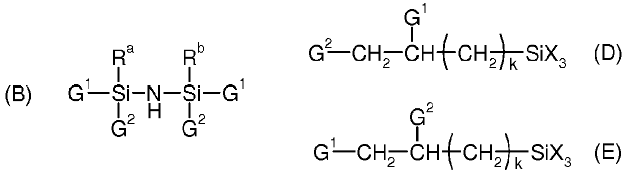 dans lesquelles les groupes G¹, G² et X sont tels que définis précédemment, les groupes R^{a} et R^{b}, identiques ou différents, sont des groupes organiques monovalents liés au silicium par un atome de carbone, et k est un entier allant de 0 à 10. R^{a} et R^{b} peuvent être choisis parmi les groupes R¹ précédemment décrits. Dans les composés de formule B, les liaisons Si-N sont hydrolysables.

Les composés organosilanes préférés selon l'invention sont ceux de formule I, et parmi ceux-ci, ceux de formules A1 et B, de préférence de formule A1. Dans ces formules, les groupes G¹ et G² préférés sont ceux de formules III et IV.

Les composés organosilanes de formule II préférés sont ceux de de formules C, D et E. Dans ces formules, les groupes G¹ et G² préférés sont ceux de formules III et IV. Selon un mode de réalisation, le composé organosilane est un composé de formule II, C, D ou E possédant au moins un groupe de formule III et/ou au moins un groupe de formule IV dans lequel x' = 0 et/ou n' = 0.

Les familles de composés organosilanes préférées sont celles des [alcoxy (polyalkylènoxy)alkyl][(perfluoroalkyl)alkyl]dialcoxysilanes ou leurs analogues dihalogénés (composés de formule I avec groupes G1 et G2 de formules III et IV dans lesquels n = 2, m' = m" = p' = p" = 0, R' = alcoxy, R" = perfluoroalkyl).

Comme exemples de composés organosilanes selon l'invention, on peut citer les composés préférés suivants ou leurs analogues dihalogénés, le composé préféré étant celui de formule (V) :

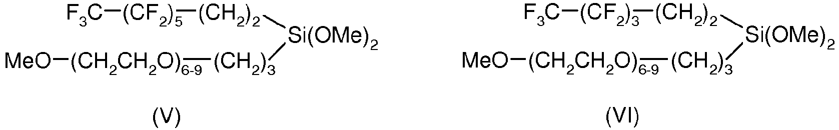

De préférence, la masse molaire du composé organosilane selon l'invention va de 400 à 4000 g/mol, de préference de 400 à 2000 g/mol, mieux de 500 à 1500 g/mol, et encore mieux de 500 à 1200 g/mol.

Les composés organosilanes de l'invention peuvent être obtenus par fonctionnalisation de dérivés de nature hydrosilane par les groupes G¹ et G² ou des groupes portant les groupes G¹ et G², en particulier par fonctionnalisation de dihydrosilanes pour les composés de formules A et B, via des réactions d'hydrosilylation d'oléfines, ou à partir d'halogénosilanes via des réactions de substitution nucléophile, en présence de catalyseurs tels des réactifs de Grignard ou des catalyseurs de type complexes de métaux de transition tels que le platine, par exemple le réactif de Speier (H₂PtCl₆, 6H₂O). Ces réactions sont bien maîtrisées par l'homme du métier.

Le revêtement précurseur du revêtement antibuée selon l'invention, formé à partir d'au moins un composé organosilane selon l'invention, possédant de préférence un groupe polyoxyalkylène et un groupe fluorocarboné tels que définis ci-dessus, constitue en outre un revêtement antisalissure. Il possède notamment des propriétés de nettoyabilité supérieures, c'est-à-dire une grande facilité de nettoyage ou d'essuyage. Il permet généralement d'abaisser l'énergie de surface de l'article d'optique à 25 mJ/m² ou moins. Les énergies de surface sont calculées dans la présente demande selon la méthode OWENS-WENDT décrite dans la référence suivante : "Estimation of a surface force energy of polymers" OWENS D.K., WENDT R.G. (1969) J. Appl. Polym. Sci, 13, 1741-1747.

Le revêtement précurseur du revêtement antibuée possède de préférence un angle de contact statique avec l'eau supérieur ou égal à 50°, de préférence encore supérieur ou égal à 60°, mieux supérieur ou égal à l'une des valeurs suivantes : 70°, 80°, 90°, 95°, 100°. Dans un mode de réalisation, le revêtement précurseur du revêtement antibuée possède un angle de contact statique avec l'eau variant de 50° à 100°,mieux de 50° à 90° et encore mieux de 60° à 80°.

La valeur de l'angle de contact peut être ajustée par l'homme du métier en intervenant notamment sur la nature, la flexibilité et la taille relative des groupes hydrophiles et hydrophobes du composé organosilane selon l'invention.

Le revêtement précurseur du revêtement antibuée présente une faible hystérèse d'angle de contact, généralement inférieure à 10°. L'hystérèse d'angle de contact (Δθ) est définie comme étant la différence entre l'angle de contact d'avancée (θa) et l'angle de contact de reculée (θᵣ) (Δθ = θₐ-θᵣ). Les angles de contact de reculée et d'avancée sont définis dans la thèse de doctorat - Université Paris 7 - Denis Diderot, présentée par Nolwenn Le Grand - Piteira et soutenue à l'ESCPI le 21 juin 2006, en particulier Chapitre 1, pages 19-20, paragraphe 1.3.4 « Une loi insuffisante dans la réalité - Hystérésis du mouillage ».

Dans la présente demande, les angles de contact statiques peuvent être déterminés selon la méthode de la goutte de liquide, selon laquelle une goutte de liquide ayant un diamètre inférieur à 2 mm (typiquement 4 µL) est déposée doucement sur une surface solide non absorbante et l'angle à l'interface entre le liquide et la surface solide est mesuré. L'eau a une conductivité comprise entre 0,3 µS et 1 µS à 25°C.

Typiquement, les mesures d'angle de contact statique sont faites avec un appareil DSA 100 (Drop Shape Analysis system) de Kruss, et les mesures d'angle de contact de reculée et d'avancée sont faites avec le même appareil dans les mêmes conditions mais sur un plan incliné.

De préférence, le précurseur de revêtement antibuée de l'invention contient moins de 5 % en masse d'oxyde métallique ou de métalloïde (par exemple de silice ou d'alumine) par rapport à la masse totale du revêtement, mieux n'en comprend pas. Lorsque le composé organosilane utilisé pour la formation du revêtement antibuée est déposé sous vide, de préférence aucun oxyde métallique n'est co-évaporé avec lui selon la technique de la co-évaporation d'au moins un composé organique et d'au moins un composé inorganique décrite dans la demande EP 1324078.

Selon l'invention, le dépôt du composé organosilane peut former un revêtement précurseur d'un revêtement antibuée comprenant une partie interne dans laquelle ledit composé organosilane est greffé au premier revêtement (lorsqu'il est présent) ou au substrat de façon permanente (au moyen d'une liaison covalente et non par simple adsorption), et une partie externe éliminable par lavage et/ou essuyage (mécaniquement et/ou chimiquement).

Pour parvenir à une telle structure, il est possible de déposer un excès de composé organosilane à la surface du premier revêtement ou du substrat comportant de préférence des groupes silanols, préférentiellement un excès de composé organosilane. Le réglage des paramètres de dépôt pour parvenir à une telle configuration est à la portée de l'homme du métier. Par excès, on entend qu'une quantité de composé organosilane est restée libre, c'est-à-dire qu'il n'est pas greffé par une liaison covalente, soit avec le premier revêtement soit avec le substrat.

L'atome de silicium porteur d'au moins un groupe hydrolysable du composé organosilane, notamment un groupe silanol ou un précurseur de celui-ci, est un groupe réactif capable d'établir une liaison covalente avec un groupe fonctionnel présent sur la surface externe du substrat ou du premier revêtement sur lequel il sera greffé. Selon un mode de réalisation, au moins l'un des groupes Si-X du composé organosilane (X désignant un groupe hydrolysable) est lié de façon covalente à un groupe hydroxyle du substrat ou du premier revêtement.

Le revêtement précurseur du revêtement antibuée est un revêtement ayant de préférence une épaisseur (avant essuyage) supérieure ou égale à 3 nm, mieux ≥ 5 nm, encore mieux ≥ 8 nm, et idéalement ≥ 10 nm. Son épaisseur est préférentiellement inférieure à 100 nm, mieux ≤ 50 nm et encore mieux ≤ 25 nm. Elle va typiquement de 3 à 100 nm, de préférence de 5 à 50 nm.

Le revêtement précurseur du revêtement antibuée est formé par dépôt à la surface du premier revêtement ou sur le substrat d'au moins un composé organosilane selon l'invention, qui est un composé filmogène, suivi d'un greffage. Ce dépôt peut être réalisé selon des techniques habituelles, de préférence par dépôt en phase gazeuse ou en phase liquide, mieux en phase gazeuse, généralement dans une chambre à vide.

Le dépôt en phase vapeur peut consister en un dépôt physique en phase vapeur (PVD) ou un dépôt chimique en phase vapeur (CVD), tel que, sans limitation, une évaporation, éventuellement assistée par faisceau d'ions, une pulvérisation, un dépôt chimique en phase vapeur assisté par plasma. La méthode préférée est le dépôt physique en phase vapeur, en particulier l'évaporation sous vide, généralement combinée à un chauffage des composés à évaporer. Elle peut être mise en jeu en utilisant des systèmes d'évaporation aussi divers qu'une source thermique à effet Joule (l'effet Joule est la manifestation thermique de la résistance électrique) ou un canon à électrons, tout autre dispositif connu de l'homme du métier pouvant également être utilisé.

Le composé organosilane peut être au préalable dissous dans un solvant avant d'être évaporé, pour mieux contrôler la vitesse d'évaporation et de dépôt. Le composé organosilane est de préférence déposé par évaporation sous vide en utilisant une source thermique à effet Joule. Pour cela, on peut placer le composé organosilane dans un récipient métallique, par exemple une capsule en cuivre, disposée sur un système à effet Joule. La capsule de cuivre peut contenir de la paille de fer ou une mousse métallique (de préférence de nickel). Dans un mode de réalisation, le composé organosilane est imprégné dans la paille de fer ou la mousse métallique.

La durée du processus de dépôt et notamment de l'évaporation est ajustée de façon à obtenir l'épaisseur de revêtement désirée. Les conditions de dépôt sont choisies de façon à ce que l'on obtienne, après le dépôt du composé organosilane, un revêtement présentant un angle de contact statique avec l'eau préférentiellement supérieur à 50°. La nature des composés employés et la durée du dépôt sont des exemples de paramètres que l'homme du métier saura faire varier pour parvenir au revêtement ayant les propriétés souhaitées.

Le revêtement précurseur du revêtement antibuée peut être obtenu en déposant directement la quantité adéquate de composé organosilane.

Cependant, les inventeurs ont constaté qu'il était préférable de former le revêtement précurseur du revêtement antibuée en déposant un excès de composé organosilane à la surface de l'article d'optique, et en éliminant l'excès de ce composé déposé mais non greffé, de façon à parvenir à la même épaisseur finale désirée. Cette façon de procéder garantit la performance antibuée des verres traités. Les inventeurs ont en effet constaté que lorsque l'on déposait directement une couche de revêtement précurseur sans excès d'épaisseur, on pouvait dans certains cas obtenir un dépôt irrégulier et un revêtement précurseur de revêtement antibuée dont la surface ne possède pas une affinité suffisante vis-à-vis d'une solution liquide de tensioactif, ce qui conduit à un revêtement ne possédant pas les propriétés antibuée recherchées.

Après le dépôt du composé organosilane conformément à l'invention, la partie externe du revêtement éliminable par essuyage peut être éliminée, par lavage et/ou essuyage, ou bien peut subir la technique d'élimination décrite dans la demande WO 2012/153072, qui met en jeu l'utilisation d'une couche temporaire, dans le cas où une telle couche temporaire a été déposée. La partie externe du revêtement précurseur du revêtement antibuée est éliminable par lavage et/ou essuyage, ce qui signifie qu'elle peut être éliminée en la soumettant notamment à un lavage avec de l'eau savonneuse (renfermant un tensioactif) au moyen d'une éponge puis avec de l'eau désionisée, et/ou à un essuyage pendant typiquement 20 secondes ou moins, au moyen d'un tissu CEMOI™, Wypall™ ou Selvith™ sec ou éventuellement imprégné d'alcool, typiquement de l'alcool isopropylique. Cet essuyage peut éventuellement être suivi d'un nouveau rinçage à l'eau désionisée et d'un essuyage final avec un chiffon.

Après l'élimination du surplus de composé organosilane déposé, c'est-à-dire de la partie externe du revêtement précurseur du revêtement antibuée éliminable par essuyage, il ne subsiste à la surface du premier revêtement selon l'invention ou du substrat que la partie interne du revêtement précurseur du revêtement antibuée contenant le composé organosilane effectivement greffé. Les molécules non greffées sont ainsi évacuées. La partie interne du revêtement précurseur n'est pas éliminable au moyen d'un traitement doux tel qu'un essuyage à sec au moyen d'un tissu ou un traitement similaire, ou bien un essuyage avec un tissu imprégné d'eau, d'eau savonneuse ou d'un alcool tel que l'alcool isopropylique.

L'invention concerne également un procédé de préparation d'un article d'optique tel que défini ci-dessus, de préférence une lentille ophtalmique, comprenant :
a) fournir un substrat ayant au moins une surface principale,
b) déposer de préférence par évaporation sous vide sur ladite surface principale du substrat au moins un composé organosilane tel que défini ci-dessus, de façon à obtenir un revêtement précurseur d'un revêtement antibuée, comprenant généralement une partie interne dans laquelle ledit composé organosilane est greffé au substrat ou lorsqu'il est présent au premier revêtement, et une partie externe éliminable par lavage et/ou essuyage

Comme expliqué précédemment, le procédé de l'invention comprend une étape d'exposition de la surface principale du substrat ou du premier revêtement, lorsque ladite surface principale du substrat est revêtue d'un premier revêtement, au composé organosilane, généralement dans une chambre à vide, provoquant le dépôt de ce composé.

Le procédé de l'invention peut aussi comprendre une étape supplémentaire de dépôt d'au moins un tensioactif à la surface du revêtement précurseur du revêtement antibuée obtenu après l'élimination de la partie externe du revêtement précurseur du revêtement antibuée éliminable par essuyage, donnant ainsi accès à un revêtement antibuée temporaire. Ce film de tensioactif fournit aux verres une protection temporaire contre la buée en créant une couche uniforme à leur surface qui aide à disperser les gouttelettes d'eau sur la surface du verre de sorte qu'elles ne forment pas de buée visible.

Selon un mode de réalisation, le tensioactif est déposé en appliquant un film d'une solution liquide contenant au moins un tensioactif. L'application de la solution de tensioactif peut être réalisée par toute technique connue, notamment par trempage, centrifugation ou pulvérisation. La solution de tensioactif est préférentiellement appliquée par dépôt d'une goutte de cette solution à la surface du précurseur du revêtement antibuée puis en l'étalant de façon à couvrir de préférence la totalité dudit revêtement précurseur. La solution de tensioactif appliquée est généralement une solution aqueuse, contenant de préférence de 0,5 à 10 %, mieux de 2 à 8 % en masse de tensioactifs.

Une solution de surfactant disponible dans le commerce pour conférer des propriétés antibuée est la solution Optifog™ Activator de la société Essilor.

Selon un autre mode de réalisation, qui est préféré, le tensioactif est appliqué sur le revêtement précurseur au moyen d'un tissu imprégné dudit tensioactif, par exemple une lingette sèche ou humide, de préférence réutilisable. Il s'agit idéalement d'une lingette sèche, c'est-à-dire présentant un aspect sec au toucher.

Ces tissus imprégnés sont capables de dispenser de façon efficace le tensioactif à la surface d'un substrat, par simple essuyage de la surface à traiter (mouvements de va et vient en translation et/ou rotation). Des tissus et lingettes imprégnés utilisables dans l'invention pour conférer des propriétés antibuée à un substrat, ainsi que leur mode de préparation, sont décrits en détail dans les demandes WO 2014/111513 et WO 2015/082521.

Le tensioactif employé doit être apte à conférer à l'article d'optique des propriétés antibuée après application à sa surface, ce qui peut être vérifié en réalisant le test de la vapeur chaude décrit dans la partie expérimentale.

Une grande variété de tensioactifs peut être employée pour une application directe au moyen d'une solution ou par le biais d'une lingette. Ceux-ci peuvent être ioniques (cationiques, anioniques ou amphotères) ou non ioniques, de préférence non ioniques ou anioniques. Cependant, un mélange de tensioactifs appartenant à ces différentes catégories est envisageable. Des exemples de tensioactifs utilisables sont ceux divulgués dans les demandes WO 2013/013929, WO 2014/111513 et WO 2015/082521. On peut citer les monoéthers d'alkyle de polyéthylène glycols, les tensioactifs possédant un cycle sorbitane et notamment les esters d'acides gras de polyoxyalkylène sorbitane, les copolymères triblocs comprenant deux blocs d'oxyde d'éthylène et un bloc central d'oxyde de propylène, les composés de nature fluoroalkyle polyéthoxylés. De préférence, on utilise un agent tensioactif comportant un groupe poly(oxyalkylène).

Le revêtement antibuée de l'invention obtenu après l'application du tensioactif à la surface du substrat présente de préférence un angle de contact statique avec l'eau inférieur ou égal à 10°, mieux inférieur ou égal à 5°. Il constitue généralement le revêtement externe de l'article d'optique.

Les exemples suivants illustrent l'invention de façon plus détaillée mais non limitative. Sauf indication contraire, toutes les épaisseurs figurant dans la présente demande sont des épaisseurs physiques, mesurées par ellipsométrie multilongueur d'onde, après dépôt.

### EXEMPLES

### 1. Matériaux et méthodes

Le composé organosilane hydrophile-hydrophobe utilisé dans les exemples pour former le précurseur du revêtement antibuée est le (3,3,4,4,5,5,6,6,7,7,8,8,8-tridécafluorooctyl)(méthoxypolyéthylènoxypropyl)diméthoxysilane possédant 6 à 9 unités oxyde d'éthylène, de formule (V) et de masse molaire 725-850 g/mol dont la synthèse est décrite dans le paragraphe suivant.

Le dispositif d'évaporation sous vide permettant de déposer les différentes couches (antireflet, revêtement précurseur du revêtement antibuée) est une machine BAK2 équipée d'un système d'évaporation par effet Joule permettant d'évaporer aussi bien les matériaux organiques que les matériaux inorganiques.

Les verres utilisés dans les exemples selon l'invention comprennent un substrat de lentille en polycarbonate de bisphénol A (correction -8.00 dioptries, +2.00 cylindre), comportant sur chacune de ses faces un primaire antichoc de polyuréthane d'une épaisseur de l'ordre de 1 micron, lui-même revêtu d'un revêtement anti-abrasion d'une épaisseur de l'ordre de 3 microns en déposant et durcissant une composition telle que définie dans l'exemple 3 du brevet EP 614957, revêtu à son tour d'un revêtement antireflet à cinq couches ZrO₂/SiO₂/ZrO₂/ITO/SiO₂ déposé sur le revêtement anti-abrasion par évaporation sous vide des matériaux dans l'ordre où ils ont été cités (épaisseurs respectives des couches : 29, 23, 68, 6,5 et 85 nm, vitesses de dépôt respectives : 0,32, 0,7, 0,32, 0,13, 1,05 nm/s). Les couches de ZrO₂ sont déposées avec introduction d'O₂ passif (7.10⁻³ Pa) sans assistance ionique. Les couches de SiO₂ sont déposées sous une pression résiduelle de 4.10⁻³ à 5.10⁻³ Pa sans assistance ionique. La couche d'ITO est déposée sous assistance ionique d'ions oxygène (1 A, 100 V) sans apport d'O₂ passif. Une couche d'ITO est une couche électriquement conductrice d'oxyde d'indium dopé à l'étain (In₂O₃:Sn).

Avant le dépôt du revêtement antireflet, les verres comportant le revêtement anti-abrasion sont soumis à un traitement d'activation de surface (IPC) qui consiste à effectuer un bombardement ionique avec des ions argon, sous vide, à une pression typiquement de 3,5.10⁻⁵ mbar (1 minute, 1 A, 100 V).

Dans les exemples, le revêtement antireflet n'est soumis à aucun traitement d'activation avant le dépôt du précurseur du revêtement antibuée.

### 2. Préparation de composés organosilanes hydrophiles-hydrophobes selon l'invention

Le (3,3,4,4,5,5,6,6,6-nonafluorohexyl)(méthoxypolyéthylènoxypropyl)diméthoxysilane possédant 6 à 9 unités oxyde d'éthylène (de formule VI) a été synthétisé en deux étapes à partir de précurseurs commerciaux de la façon suivante. Dans une première étape, le diméthoxysilane H₂Si(OMe)₂ (CAS 2768-02-7) réagit avec un allyloxypolyéthylèneglycol (CAS 27274-31-3) possédant 6 à 9 unités oxyde d'éthylène en présence du réactif de Speier (H₂PtCl₆, 6H₂O) pendant 1 à 10h, à une température comprise entre 40°C et 100°C, en milieu solvant (mélange isopropanol/tertiobutanol) pour obtenir l'intermédiaire (A), celui-ci réagissant dans une deuxième étape avec le 1H,1H,2H-perfluoro-1-hexène (CAS 19430-93-4) dans les mêmes conditions réactionnelles que l'étape précédente, pour conduire au produit désiré objet de l'invention, comme présenté sur le schéma ci-dessous :

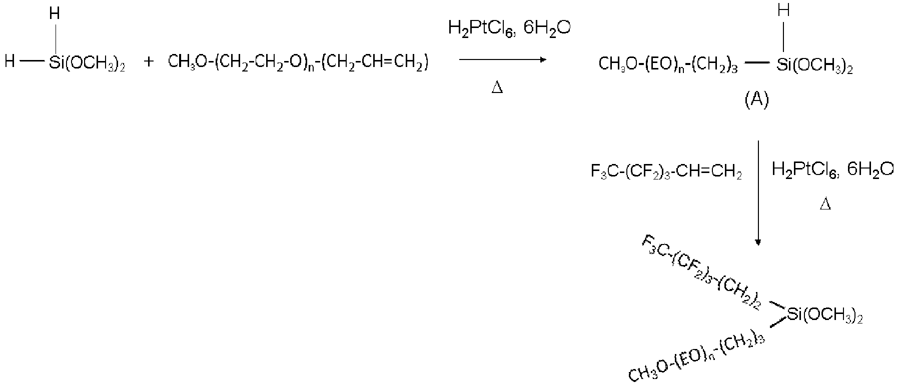

Le (3,3,4,4,5,5,6,6,7,7,8,8,8-tridécafluorooctyl) (méthoxypolyéthylènoxypropyl) diméthoxysilane possédant 6 à 9 unités oxyde d'éthylène, de formule (V), a été synthétisé de façon analogue à partir du 1H,1H,2H-perfluoro-1-octène (CAS 25291-17-2), commercialisé par Alfa Aesar.

### 3. Dépôt du précurseur du revêtement antibuée en phase vapeur et mesure de ses propriétés de surface

Le composé organosilane utilisé pour former le précurseur de revêtement antibuée est dans un premier temps conditionné dans une capsule de cuivre munie de paille de fer afin limiter les projections de produit lors de l'évaporation par effet Joule. Chaque capsule, contenant 100 à 300 µL de composé, selon l'épaisseur désirée, est préchauffée sur une plaque chauffante à 70°C pendant 2 minutes avant l'étape dévaporation pour éliminer les solvants éventuels et dégazer le produit, puis positionnée sur une nacelle.

Le dépôt du précurseur du revêtement antibuée selon l'invention sur le revêtement antireflet de chaque face des verres est réalisé par évaporation sous vide en utilisant une source thermique à effet Joule, à savoir une nacelle métallique traversée par un courant électrique dans laquelle sont déposées les capsules de cuivre contenant les composés à évaporer (vitesse : variant de plus de 0 nm/s à 0,8 nm/s, préparation de chauffe sous cache : 15 secondes à 120 A, courant de chauffe variant de 0 à 140 A cache ouvert).

Dans les exemples 1 à 3, différentes quantités de composé organosilane ont été évaporées. On obtient un revêtement précurseur de revêtement antibuée ayant une épaisseur de l'ordre de 4 à 17 nm (épaisseurs mesurées avec un ellipsomètre multi-longueur d'ondes, incluant le surplus de composé siloxane).

24 heures après le dépôt du précurseur du revêtement antibuée, chaque verre est soumis à la procédure de lavage suivante : le verre est rincé avec de l'eau savonneuse à l'éponge (4 rotations face convexe, 4 rotations face concave), rincé abondamment à l'eau du robinet, trempé 3 ou 4 fois dans un bécher d'eau désionisée, séché avec un chiffon (Selvyt), frotté avec un tissu Cémoi™ imbibé d'alcool isopropylique, rincé abondamment à l'eau du robinet, trempé 3 ou 4 fois dans un bécher d'eau désionisée, séché avec un chiffon (Selvyt), et essuyé avec un tissu Cémoi™ sec afin que le surplus de composés siloxanes déposé soit évacué. Le tissu Cémoi™ désigne un tissu en microfibres (fabricant KB SEIREN - distributeur : Facol, référence Microfibre M8405 30x40).

Les mesures d'angles de contact avec l'eau ont été conduites à ce stade, sur les verres ainsi lavés et essuyés, à l'aide d'un goniomètre semi-automatique par acquisition et analyse d'images DSA 100 (Drop Shape Analysis system) de Kruss équipé de l'option table inclinable (PA3220). En particulier, les angles de contact d'avancés et de reculée ont été mesurés selon la méthode de la plaque basculante décrite en détail dans la demande WO 2014/102298, au nom du déposant.

Les résultats des mesures d'angle de contact sont présentés dans le tableau 1 et indiquent les moyennes obtenues pour les différents verres testés.

**Tableau 1**

| Exemple | Epaisseur du revêtement antibuée (précurseur) (nm) | | Angle de contact d'avancée (°) | Angle de contact de reculée (°) | Angle de contact statique (°) | Hystérèse (°) |
|---|---|---|---|---|---|---|
| | Initiale (*) | Finale (**) | | | | |
| 1 | 4 | 1-3 | 72 | 38 | 63 | 9 |
| 2 | 8 | 1-3 | 70 | 30 | 61 | 9 |
| 3 | 17 | 1-3 | 69 | 41 | 61 | 8 |
| Comp. | 10 | 1-3 | 44 | 27 | 39 | 17 |

| | | | | | | |
|---|---|---|---|---|---|---|
| (*) Avant élimination du surplus de composé organosilane déposé. (**) Après élimination du surplus de composé organosilane déposé. | | | | | | |

On constate que l'épaisseur du revêtement précurseur du revêtement antibuée a peu d'influence sur les valeurs des angles de contact et l'hystérèse.

Dans le tableau 1, l'exemple comparatif correspond à l'exemple 3 de la demande WO 2011/080472, au nom du déposant. Dans cet exemple, le précurseur du revêtement antibuée a été formé par dépôt en phase vapeur du composé organosilane 2-[méthoxy(polyéthylèneoxy)propyl]triméthoxysilane possédant 6 à 9 unités oxyde d'éthylène.

Les précurseurs de revêtement antibuée selon l'invention possèdent de meilleures propriétés antisalissure que le revêtement de l'exemple comparatif du fait de leur angle de contact statique plus élevé, et une hystérèse nettement améliorée.

### 4. Formation du revêtement temporaire antibuée et évaluation des performances antibuée

Les verres lavés et essuyés conformément au protocole du paragraphe précédent sont essuyés sur leurs deux faces avec une lingette en tissu Cémoi™ imprégnée de tensioactif (Capstone® FS 3100, 30 % en masse) en effectuant un mouvement en spirale du centre vers le bord avec la lingette, de façon à les « charger » en tensioactif, en veillant à couvrir la totalité de la surface (sans pression excessive). Ceci correspond à une application. Différents niveaux d'application peuvent être réalisés, par exemple 5, 10, 15 ou 20 applications.

Les verres sont ensuite placés 24 heures dans une enceinte régulée en température (20-25°C) et à une humidité de 50 %, puis placés 15secondes au dessus d'un récipient chauffé contenant de l'eau à 55°C (test de la vapeur chaude). Immédiatement après, une échelle d'acuité visuelle située à 3-4 m du point de contrôle est observée à travers le verre placé à moins de 10 cm de l'œil et l'on procède à une notation (détaillée ci-dessous) en vérifiant l'uniformité de la transparence et l'absence de buée.

Le test, réalisé sous éclairage ambiant (sans éclairage directif), est considéré comme réussi si un observateur ayant une vision de 10/10 et ayant le verre placé devant son œil obtient une acuité visuelle d'au moins 6/10ème (en transmission, table de Raskin placée à 3-4 mètres, échelle Armaignac Tridents, réf. T6 disponible chez FAX INTERNATIONAL), et n'observe ni buée ni distorsion visuelle gênante (échelle de notation 1 ou 2).

En revanche, un verre est déclaré non-conforme (échelle de notation 3) si la transparence n'est pas totale (présence de buée) et/ou non uniforme.

La grille de notation est la suivante :
Note 1 : Film d'eau homogène, présence éventuelle de poussières non gênantes.
Note 2 : Présence de points de distorsion non gênants.
Note 3 : Film d'eau hétérogène, lecture déformée et/ou présence de buée.

Ce test permet de simuler les conditions de vie courante où un porteur place son visage au dessus d'une tasse de thé, café ou d'une casserole d'eau bouillante.

Les résultats des tests de performance antibuée réalisés sur plusieurs échantillons de verres sont présentés dans le tableau 2.

**Tableau 2**

| Exemple | 5 applications de tensioactif | 10 applications de tensioactif | 15 applications de tensioactif | 20 applications de tensioactif |
|---|---|---|---|---|
| 1 | 25 % note 2 | 100 % note 2 | 100 % note 1 | 100 % note 1 |
| | 75 % note 3 | | | |
| 2 | 25 % note 2 | 100 % note 2 | 100 % note 1 | 100 % note 1 |
| | 75 % note 3 | | | |
| 3 | 18 % note 1 | 100 % note 1 | 100 % note 1 | 100 % note 1 |
| | 55 % note 2 | | | |
| | 27 % note 3 | | | |

On constate que 5 cycles d'application de tensioactif ne suffisent pas à atteindre une performance de niveau 1 à 100%. Néanmoins, une épaisseur de précurseur de revêtement antibuée plus importante permet d'y parvenir. L'augmentation du nombre de cycles d'application à 10, 15 et 20 montre qu'avec une épaisseur de 17 nm (exemple 3), 10 cycles d'application sont suffisants pour obtenir une performance de niveau 1. Pour des épaisseurs de précurseur de revêtement antibuée de 4 et 8 nm (exemples 1 et 2), 5 cycles d'application supplémentaires sont nécessaires pour atteindre le niveau 1.

## Revendications

1. Composé organosilane ayant au moins un atome de silicium porteur d'au moins un groupe hydrolysable, d'au moins un groupe non hydrolysable comportant un groupe hydrophile choisi parmi les groupes polyoxyalkylène, polyol, polyéther et sulfonate, et d'au moins un groupe non hydrolysable comportant un groupe hydrophobe possédant au moins un atome de fluor, ledit groupe hydrophile et ledit groupe hydrophobe n'étant pas tous deux compris dans la chaîne principale d'un même substituant de l'atome de silicium.

2. Composé organosilane selon la revendication 1, **caractérisé en ce que** le groupe hydrophile est un groupe polyoxyalkylène.

3. Composé organosilane selon l'une quelconque des revendications précédentes, **caractérisé en ce que** le groupe non hydrolysable comportant un groupe hydrophile est un groupe de formule :
-(CH₂)_{n'}-(L')_{m'}-(OR)_{n"}-X¹-(L")_{m"}-R'
où R' est un atome d'hydrogène, un groupe acyle ou un groupe alkyle, linéaire ou ramifié, pouvant être substitué par un ou plusieurs groupes fonctionnels, et pouvant comporter en outre une ou plusieurs doubles liaisons, R est un groupe alkylène linéaire ou ramifié, L' et L" sont des groupes divalents identiques ou différents, X¹ représente O, NH ou S, n' est un entier allant de 0 à 10, n" est un entier allant de 1 à 50, m' est égal à 0 ou 1, m" est égal à 0 ou 1.

4. Composé organosilane selon l'une quelconque des revendications précédentes, **caractérisé en ce que** le groupe hydrophobe est un groupe fluorocarboné.

5. Composé organosilane selon l'une quelconque des revendications précédentes, **caractérisé en ce que** le groupe non hydrolysable comportant un groupe hydrophobe possédant au moins un atome de fluor est un groupe fluoré de formule :
-(C_{x'}H_{y'}F_{z'})-(L¹)_{p'}-(CₓH_{y}F_{z})-(L²)_{p"}-R"
où R" est un atome d'hydrogène, de fluor, un groupe acyle ou un groupe alkyle, linéaire ou ramifié, pouvant être substitué par un ou plusieurs hétéroatomes ou groupes fonctionnels, et pouvant comporter en outre une ou plusieurs doubles liaisons, L¹ et L² sont des groupes divalents identiques ou différents, x' est un entier allant de 0 à 10, y' et z' sont des entiers tels que y'+z' = 2x', x est un entier allant de 1 à 40, y et z sont des entiers tels que y+z = 2x, p' est égal à 0 ou 1, p" est égal à 0 ou 1.

6. Composé organosilane selon l'une quelconque des revendications précédentes, **caractérisé en ce qu'**il répond aux formules (I) ou (II) :
(G¹)(G²)Si(X)ₙ(R¹)₂₋ₙ (I)
(G¹)(G²)A-Si(X)ₘ(R¹)₃₋ₘ (II)
dans lesquelles G¹ est un groupe non hydrolysable comportant un groupe hydrophile, G² est un groupe non hydrolysable comportant un groupe hydrophobe possédant au moins un atome de fluor, R¹ est un groupe organique monovalent lié au silicium par un atome de carbone, les groupes X, identiques ou différents, sont des groupes hydrolysables, A est un groupe espaceur trivalent, n = 1 ou 2, m = 1, 2 ou 3.

7. Composé organosilane selon l'une quelconque des revendications précédentes, **caractérisé en ce qu'**il répond à l'une ou l'autre des formules suivantes : 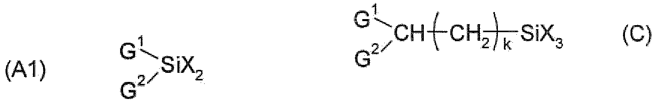 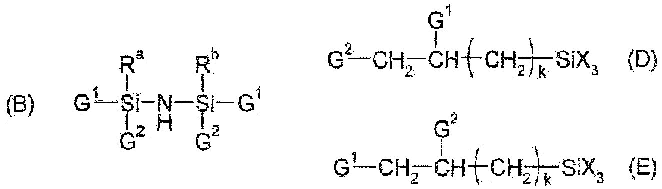 dans lesquelles G¹ est un groupe non hydrolysable comportant un groupe hydrophile, G² est un groupe non hydrolysable comportant un groupe hydrophobe possédant au moins un atome de fluor, les groupes X, identiques ou différents, sont des groupes hydrolysables, les groupes R^{a} et R^{b}, identiques ou différents, sont des groupes organiques monovalents liés au silicium par un atome de carbone, k est un entier allant de 0 à 10.

8. Composé organosilane selon l'une quelconque des revendications précédentes, **caractérisé en ce qu'**il répond à la formule :

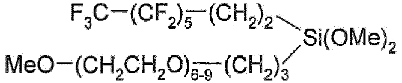

9. Composé organosilane selon l'une quelconque des revendications précédentes, **caractérisé en ce qu'**il possède une masse molaire variant de 500 à 1500 g/mol.

10. Article d'optique ayant un substrat revêtu d'un revêtement précurseur d'un revêtement antibuée, **caractérisé en ce que** ledit revêtement précurseur d'un revêtement antibuée est formé par dépôt à la surface de l'article d'optique d'au moins un composé organosilane ayant au moins un atome de silicium porteur d'au moins un groupe hydrolysable, d'au moins un groupe non hydrolysable comportant un groupe hydrophile, et d'au moins un groupe non hydrolysable comportant un groupe hydrophobe possédant au moins un atome de fluor, ledit groupe hydrophile et ledit groupe hydrophobe n'étant pas tous deux compris dans la chaîne principale d'un même substituant de l'atome de silicium.

11. Article d'optique selon la revendication 10, **caractérisé en ce que** le revêtement précurseur du revêtement antibuée possède un angle de contact statique avec l'eau supérieur ou égal à 50°, de préférence supérieur ou égal à 60°.

12. Article d'optique selon la revendication 10 ou 11, **caractérisé en ce que** le revêtement précurseur du revêtement antibuée est revêtu d'un film de tensioactif.

13. Article d'optique selon l'une quelconque des revendications 10 à 12, **caractérisé en ce qu'**il constitue une lentille ophtalmique.

14. Procédé de préparation d'un article d'optique selon l'une quelconque des revendications 10 à 13, comprenant :
a) fournir un substrat ayant au moins une surface principale,
b) déposer sur ladite surface principale du substrat au moins un composé organosilane selon l'une quelconque des revendications 1 à 9, de façon à obtenir un revêtement précurseur d'un revêtement antibuée.

15. Procédé selon la revendication 14, **caractérisé en ce que** ledit composé organosilane est déposé par évaporation sous vide.

## Patentansprüche

1. Organosilanverbindung, die mindestens ein Siliciumatom aufweist, welches mit mindestens einer hydrolysierbaren Gruppe, mit mindestens einer nicht-hydrolysierbaren Gruppe, die eine hydrophile Gruppe aufweist, welche aus den Polyalkoxylen-, Polyol-, Polyether- und Sulfonatgruppen ausgewählt ist, und mit mindestens einer nicht-hydrolysierbaren Gruppe versehen ist, die eine hydrophobe Gruppe aufweist, welche mindestens ein Fluoratom besitzt, wobei die hydrophile Gruppe und die hydrophobe Gruppe nicht beide in der Hauptkette ein- und desselben Substituenten des Siliciumatoms enthalten sind.

2. Organosilanverbindung nach Anspruch 1, **dadurch gekennzeichnet, dass** es sich bei der hydrophilen Gruppe um eine Polyalkoxylengruppe handelt.

3. Organosilanverbindung nach einem beliebigen der vorhergehenden Ansprüche, **dadurch gekennzeichnet, dass** es sich bei der nicht-hydrolysierbaren Gruppe, die eine hydrophile Gruppe aufweist, um eine Gruppe der folgenden Formel handelt:
- (CH₂)ₙ-(L')ₘ-(OR)ₙ-X¹-(L")ₘ-R'
wobei R' ein Wasserstoffatom, eine Acylgruppe oder eine Alkylgruppe linearer oder verzweigter Beschaffenheit ist, welche mit einer oder mehreren funktionellen Gruppen substituiert sein kann und welche darüber hinaus eine oder mehrere Doppelbindungen aufweisen kann, R eine geradkettige oder verzweigte Alkylengruppe ist, L' und L" gleichartige oder verschiedenartige zweibindige Gruppen sind, X¹ für O, NH oder S steht, n' eine ganze Zahl im Bereich von 0 bis 10 ist, n" eine ganze Zahl im Bereich von 1 bis 50 ist, m' gleich 0 oder 1 ist, m" gleich 0 oder 1 ist.

4. Organosilanverbindung nach einem beliebigen der vorhergehenden Ansprüche, **dadurch gekennzeichnet, dass** es sich bei hydrophoben Gruppe um eine Fluorkohlenstoffgruppe handelt.

5. Organosilanverbindung nach einem beliebigen der vorhergehenden Ansprüche, **dadurch gekennzeichnet, dass** es sich bei der nicht-hydrolysierbaren Gruppe, die eine hydrophobe Gruppe aufweist, welche mindestens ein Fluoratom besitzt, um eine fluorhaltige Gruppe der folgenden Formel handelt:
-(C_{x'}H_{y'}F_{z'})-(L¹)ₚ-(CₓH_{y}F_{z})-(L²)ₚ-R"
wobei R" ein Wasserstoff-, ein Fluoratom, eine Acylgruppe oder eine Alkylgruppe geradkettiger oder verzweigter Beschaffenheit ist, welche mit einem oder mehreren Heteroatomen oder funktionellen Gruppen substituiert sein kann und welche darüber hinaus eine oder mehrere Doppelbindungen aufweisen kann, L¹ und L² gleichartige oder verschiedenartige zweibindige Gruppen sind, x' eine ganze Zahl im Bereich von 0 bis 10 ist, y' und z' derartige ganze Zahlen sind, dass y'+z' = 2x', x eine ganze Zahl im Bereich von 1 bis 40 ist, y und z derartige ganze Zahlen sind, dass y+z = 2x, p' gleich 0 oder 1 ist, p" gleich 0 oder 1 ist.

6. Organosilanverbindung nach einem beliebigen der vorhergehenden Ansprüche, **dadurch gekennzeichnet, dass** sie den Formeln (I) oder (II) entspricht:
(G¹)(G²)Si(X)ₙ(R¹)₂₋ₙ (I)
(G¹)(G²)A-Si(X)ₘ(R¹)₃₋ₘ (II)
in welchen G¹ eine nicht-hydrolysierbare Gruppe ist, die eine hydrophile Gruppe aufweist, G² eine nicht-hydrolysierbare Gruppe ist, die eine hydrophobe Gruppe aufweist, welche mindestens ein Fluoratom besitzt, R¹ eine einbindige organische Gruppe ist, die über ein Kohlenstoffatom an das Silicium gebunden ist, die Gruppen X gleichartige oder verschiedenartige hydrolysierbare Gruppen sind, A eine dreibindige Abstandsgruppe ist, n = 1 oder 2 ist, m = 1, 2 oder 3 ist.

7. Organosilanverbindung nach einem beliebigen der vorhergehenden Ansprüche, **dadurch gekennzeichnet, dass** sie einer oder mehreren der folgenden Formeln entspricht: 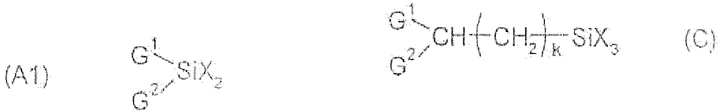 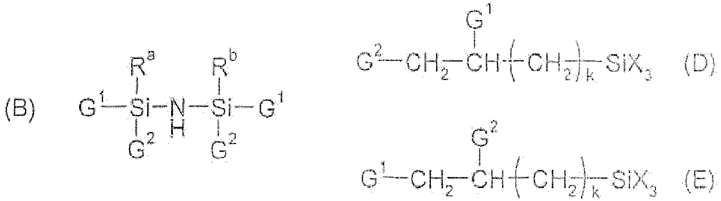 in welchen G¹ eine nicht-hydrolysierbare Gruppe ist, die eine hydrophile Gruppe aufweist, G² eine nicht-hydrolysierbare Gruppe ist, die eine hydrophobe Gruppe aufweist, welche mindestens ein Fluoratom besitzt, die Gruppen X gleichartige oder verschiedenartige hydrolysierbare Gruppen sind, die Gruppen R^{a} und R^{b} gleichartige oder Verschiedenartige einbindige organische Gruppen sind, die über ein Kohlenstoffatom an das Siliciumatom gebunden sind, k eine ganze Zahl im Bereich von 0 bis 10 ist.

8. Organosilanverbindung nach einem beliebigen der vorhergehenden Ansprüche, **dadurch gekennzeichnet, dass** sie der folgenden Formel entspricht:

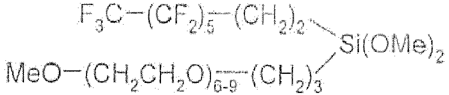

9. Organosilanverbindung nach einem beliebigen der vorhergehenden Ansprüche, **dadurch gekennzeichnet, dass** sie eine Molmasse innerhalb einer Schwankungsbreite von 500 bis 1.500 g/mol besitzt.

10. Optischer Gegenstand, der ein Substrat hat, welches mit einer Vorläuferbeschichtung einer Antibeschlagbeschichtung überzogen ist, **dadurch gekennzeichnet, dass** die Vorläuferbeschichtung gebildet wird, indem auf die Oberfläche des optischen Gegenstands mindestens eine Organosilanverbindung aufgebracht wird, die mindestens ein Siliciumatom aufweist, weiches mit mindestens einer hydrolysierbaren Gruppe, mit mindestens einer nicht-hydrolysierbaren Gruppe, die eine hydrophile Gruppe aufweist, und mit mindestens einer nicht-hydrolysierbaren Gruppe versehen ist, die eine hydrophobe Gruppe aufweist, welche mindestens ein Fluoratom besitzt, wobei die hydrophile Gruppe und die hydrophobe Gruppe nicht beide in der Hauptkette ein- und desselben Substituenten des Siliciumatoms enthalten sind.

11. Optischer Gegenstand nach Anspruch 10, **dadurch gekennzeichnet, dass** die Vorläuferbeschichtung der Antibeschlagbeschichtung einen statischen Kontaktwinkel mit Wasser besitzt, welcher mindestens 50°, vorzugsweise mindestens 60°, beträgt.

12. Optischer Gegenstand nach Anspruch 10 oder 11, **dadurch gekennzeichnet, dass** die Vorläuferbeschichtung der Antibeschlagbeschichtung mit einem Tensidfilm überzogen ist.

13. Optischer Gegenstand nach einem beliebigen der Ansprüche 10 bis 12, **dadurch gekennzeichnet, dass** er eine augenmedizinische Linse darstellt.

14. Verfahren zur Herstellung eines optischen Gegenstands nach einem beliebigen der Ansprüche 10 bis 13, das Folgendes umfasst:
a) Bereitstellen eines Substrats, das mindestens eine Hauptoberfläche aufweist,
b) Aufbringen mindestens einer Organosilanverbindung nach einem beliebigen der Ansprüche 1 bis 9 auf die Hauptoberfläche des Substrats, um auf diese Weise eine Vorläuferbeschichtung einer Antibeschlagbeschichtung zu erhalten.

15. Verfahren nach Anspruch 14, **dadurch gekennzeichnet, dass** die Organosilaverbindung durch Vakuumverdampfung aufgebracht wird.

## Claims

1. An organosilane compound having at least one silicon atom bearing at least one hydrolyzable group, at least one non-hydrolyzable group comprising a hydrophilic group selected from the polyoxyalkylene, polyol, polyether and sulfonate groups, and at least one non-hydrolyzable group comprising a hydrophobic group having at least one fluorine atom, said hydrophilic group and said hydrophobic group not both being included in the main chain of one and the same substituent of the silicon atom.

2. The organosilane compound as claimed in claim 1, **characterized in that** the hydrophilic group is a polyoxyalkylene group.

3. The organosilane compound as claimed in either one of the preceding claims, **characterized in that** the non-hydrolyzable:group comprising a hydrophilic group is: a group of formula:
-(CH₂)_{n'}-(L')_{m'}-(OR)_{n'}-X¹-(L")_{m"}-R'
wherein R' is a hydrogen atom, an acyl group or an alkyl group which is linear or branched, which can optionally be substituted with one or more functional groups and which can additionally comprise one or more double bonds, R is a linear or branched alkylene group, L' and. L" are divalent groups, which may be identical or different, X¹ represents O, NH or S, n' is an integer ranging from 0 to 10, n" is an integer ranging from 1 to 50, m' is equal to 0 or 1, and m" is equal to 0 or 1.

4. The organosilane compound as claimed in any one of the preceding claims, **characterized in that** the hydrophobic group is a fluorocarbon group.

5. The organosilane compound as claimed in either one of the preceding claims, **characterized in that** the non-hydrolyzable group comprising a hydrophobic group having at least one fluorine atom is a fluorinated group of formula:
-(C_{x'}H_{y'}F_{z'})-(L¹)ₚ-(CₓH_{y}F_{z})-(L²)_{p"}-R"
Wherein R" is a hydrogen or fluorine atom, an acyl group or an alkyl group which is linear or branched, which can be substituted with one or more heteroatoms or functional groups, and which can additionally comprise one or more double bonds, L¹ and L² are divalent groups, which may be identical or different, x' is an integer ranging from 0 to 10, y' and z' are integers such that y'+z' = 2x', x is an integer ranging from 1 to 40, y and z are integers such that y+z = 2x, p' is equal to 0 or 1, and p" is equal to 0 or 1.

6. The organosilane compound as claimed in any one of the preceding claims, **characterized in that** it corresponds to formula (I) or (II):
(G¹)(G²)Si(X)ₙ(R¹)₂₋ₙ (I)
(G¹)(G²)A-Si(X)ₘ(R¹)₃₋ₘ (II).
in which G¹ is a non-nydrolyzable group comprising a hydrophilic group, G² is a non-hydrolyzable group comprising a hydrophobic group haying at least one fluorine atom, R¹ is a monovalent organic group: bonded to the silicon by a carbon atom, the groups X, which may be identical or different, are hydrolyzable groups, A is a trivalent spacer group, n = 1 or 2, m = 1, 2 or 3.

7. The organosilane compound as claimed in any one of the preceding claims, **characterized in that** it corresponds to one or other of the following formulae: 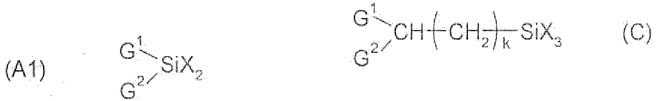 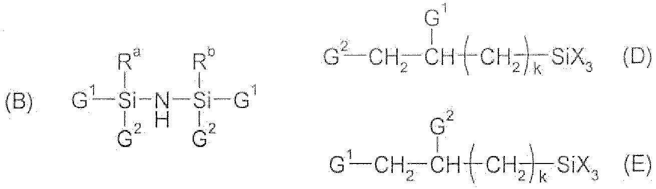 in which G¹ is a non-hydrolyzable group comprising a hydrophilic group, G² is a non-hydrolyzable group: comprising a hydrophobic group having at least one fluorine atom, the groups X, which may be identical or different, are hydrolyzable groups, the R^{a} and R^{b} groups, which may be identical or different, are monovalent organic groups bonded to the silicon by a carbon atom, and k is an integer ranging from 0 to 10.

8. The organosilane compound as claimed in any one of the preceding claims, **characterized in that** it corresponds to the formula:

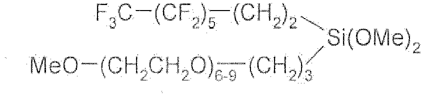

9. The organosilane compound as claimed in any one of the preceding claims, **characterized in that** it has a molar mass ranging from 500 to 1500 g/mol.

10. An optical article having a substrate coated with a precursor coating for an anti-fog coating, **characterized in that** said precursor coating for an anti-fog coating is formed by depositing, at the surface of the optical article, at least one organosilane compound, having at least one silicon atom bearing at least one hydrolyzable group, at least one non-hydrolyzable group comprising a hydrophilic group, and at least one non-hydrolyzable group comprising a hydrophobic group having at least one fluorine atom, said hydrophilic group and said hydrophobic group not both being included in the main chain of one and the same substituent of the silicon atom.

11. The optical article as claimed in claim 1 0, **characterized in that** the .precursor coating for the anti-fog coating has a static contact angle with water of greater than or equal to 50°, preferably greater than or equal to 60°.

12. The optical article as claimed in claim 10 or 11, **characterized in that** the precursor coating for the anti-fog coating is coated with a surfactant film.

13. The optical article as claimed in any one of claims 10 to 12, **characterized in that** it constitutes an ophthalmic lens.

14. A process for preparing an optical article as claimed in any one of claims 10 to 13, comprising:
a) providing a substrate having at least one main surface,
b) depositing, on said main surface of the substrate, at least one organosilane compound as claimed in any one of claims 1 to 9, so as to obtain a precursor coating for an anti-fog coating.

15. The process as claimed in claim 14, **characterized in that** said organosilane compound is deposited by evaporation under vacuum.
